# EUROPEAN PATENT APPLICATION

(11) **EP 1 990 619 A2**
(43) Date of publication of application: **12.11.2008**
(21) Application number: 08008672.1
(22) Date of filing: 08.05.2008
(51) Int. Cl.: G01K 1/08, G01K 7/04

(54) **Mineral oxide thermocouple temperature probe and production process thereof**

(30) Priority: 11.05.2007 IT TO20070321
(71) Applicant: Limbarinu, Boris, Domenico, 10040 Rivalta di Torino (TO) (IT); Limbarinu, Roberto, 10040 Rivalta di Torino (TO) (IT)
(72) Inventor: Limbarinu, Boris, Domenico, 10040 Rivalta di Torino (TO) (IT); Limbarinu, Roberto, 10040 Rivalta di Torino (TO) (IT)
(74) Representative: Aprà, Mario

(57) **Abstract**

The temperature probe comprises a mineral insulated sensing element (11) and an extension cable (12), wherein the terminals of the two conductor wires (13) of the sensing element (11) abut against the corresponding terminals of the electrical conductors (14) of the extension cable (12), providing an electrical junction at a mechanical connection body. According to the invention, said connection body (15) is formed of a thermosetting plastic material, capable of withstanding temperatures in the order of approximately 400 - 450°C, co-molded with respect to said electrical junction.

## Description

The present invention relates to a mineral oxide thermocouple temperature probe. The invention also relates to a production process of this temperature probe.

### State of the art

Known mineral oxide thermocouple temperature probes are substantially composed of two elements:
- a mineral insulated sensing element,
- an extension cable.

The mineral insulated sensing element comprises a pair of homogeneous conductor wires, dissimilar and forming the entire thermocouple.

The extension cable is an extension of the thermoelectric circuit, starting from a region in proximity of the measurement point up to the point of reference, obtained with a pair of conductors normally identical to those of the thermocouple, but of different quality and construction. The extension cable is required to produce the same electromotive force as the thermocouple.

These two elements are suitably mutually connected by electric spot welding, laser welding or any other type of electrical junction.

Moreover, this electrical junction must be isolated from the surrounding environment and against the possibility of the two conductors accidentally short circuiting, causing a false temperature reading.

This operation is currently carried out with the following methods, forming a junction called "metal transition":
- electric spot welding or laser welding of the two elements mineral insulated sensing element + extension cable);
- positioning of a mica film between the two conductors in order to prevent them from short circuiting;
- covering the junction with epoxy resin having a resistance to a maximum temperature of 250°C;
- covering this area using metal material which is mechanically fastened by crimping on both elements.

However, exposure of the metal transition to temperatures in proximity of 250°C exposes the mineral oxide thermocouple temperature probe to the following drawbacks:
- the possibility of the junction short circuiting due to mechanical stresses, creating a new measurement junction and thus creating a false temperature reading;
- the possibility of humidity penetrating the transition, as an adequate seal is no longer guaranteed; the probe can lose its insulation to ground and to the conductors causing alterations in measurement;
- the possibility of the junction creating a false contact, as a result of dilation of the materials;
- the possibility of breakages of the electrical junction, as reciprocal positioning between mineral insulated sensing element and extension cable is not guaranteed due to different thermal dilation coefficients.

Starting from the notion of these drawbacks, the present invention intends to provide a solution.

An object of the present invention is that of providing a mineral oxide thermocouple temperature probe, the junction of which is not exposed to the risk of short circuit due to mechanical stresses of the transition.

Another object of the invention is to provide a temperature probe of the type specified, in which humidity cannot penetrate inside the transition.

Yet another object of the invention is to provide a temperature probe of the type indicated, the junction of which is absent from the risk of false contacts, as a result of dilation of the materials.

A further object of the invention is to provide a temperature probe of the aforesaid type, wherein the stability of the reciprocal positioning between mineral insulated sensing element and extension cable is guaranteed.

Yet a further object of the invention is to provide a production process of this mineral oxide thermocouple temperature probe which is simple and inexpensive to implement.

In view of these objects, the present invention provides a mineral oxide thermocouple temperature probe, the essential characteristic of which forms the subject matter of claim 1.

The invention also provides a production process of this mineral oxide thermocouple temperature probe, the essential characteristic of which forms the subject matter of claim 3.

Further advantageous characteristics are described in the dependent claims.

The aforesaid claims are intended as fully reproduced herein.

According to the present invention, there is formed a mechanical connection body between the sensing element of the thermocouple and the extension cable, providing a protection of the electrical connection between said sensing element and said cable, through co-molding of a thermosetting plastic material capable of withstanding temperatures in the order of approximately 400 - 450°C.

The present invention will be more apparent from the detailed description below with reference to the accompanying drawing, provided purely by way of non-limiting example, wherein;

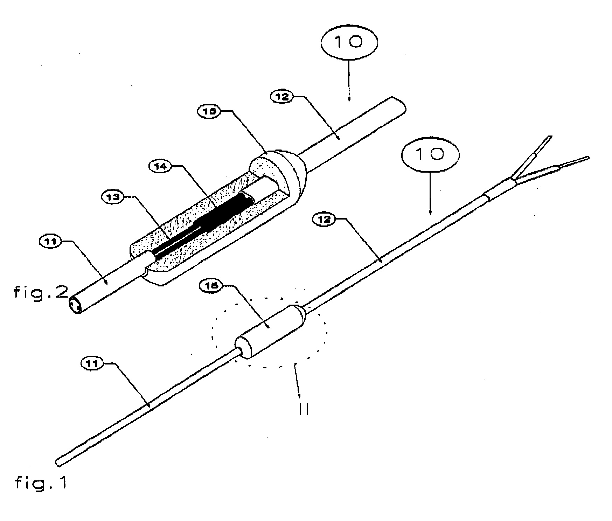

- fig. 1 shows a perspective view of the mineral oxide thermocouple temperature probe according to an example of embodiment of the invention;
- fig. 2 shows a detailed view in a larger scale and in a partial cross section of the detail II of fig. 1.

With reference to the drawings, the number 10 indicates as a whole the mineral oxide thermocouple temperature probe according to said example of embodiment of the invention.

Said temperature probe 10 comprises a mineral insulated sensing element 11 and an extension cable 12.

Said sensing element 11 comprises a pair of homogeneous electrical conductor wires 13, dissimilar and forming the entire thermocouple.

Said extension cable 12 comprises a pair of electrical conductors 14 substantially identical to those of the thermocouple, but of different quality and construction.

The terminals of the two conductor wires 13 of the thermocouple 11 abut against the corresponding terminals of the electrical conductors 14 of the extension cable 12, producing an electrical junction at a mechanical connection body 15 between said sensing element of the thermocouple 11 and said extension cable 12.

According to the invention, said connection body 15 is composed of a thermosetting plastic material, capable of withstanding temperatures in the order of approximately 400 - 450°C, co-molded with respect to said electrical junction.

In particular, said connection body 15 is formed by a capsule made of thermosetting plastic material, capable of withstanding temperatures in the order of approximately 400 - 450°C, co-molded and closely shrouding with respect to said electrical junction.

The mineral oxide thermocouple temperature probe 10 according to the invention thus comprises a transition 15 made of co-molded thermoplastic material.

Advantageously, said thermoplastic material is of silicone, Bakelite or melamine type.

Said transition 15 ensures maintenance of all the following characteristics, up to an operating temperature in the order of approximately 400°C - 450°C.

### a) Mechanical resistance

Co-molding of the transition 15 eliminates the drawback of different material dilations, which in prior art temperature probes determines breakages between electrical conductors, as the co-molded material is the only material involved in protecting the junction and guarantees operation for the aforesaid operating temperatures.

### b) Elimination of mechanical stresses

It is no longer necessary to subject either the extension cable or the mineral insulated sensing element to mechanical crimping; this leads to the elimination of possible mechanically fragile points due to residual tensions.

### c) Impossibility of short circuit between the electrical conductors of the mineral oxide insulation and those of the extension cable.

The junction is not covered with a metal sleeve (as instead occurs in prior art thermal probes); it is therefore impossible for the conductors to accidentally short circuit with the ground of the sensor.

### d) Impossibility of false contacts of the junction which cause reading errors

The junction completely constrained inside the co-molded transition is not subject to reciprocal movements of the electrical conductors due to different dilation at the operating temperature (approximately 400 - 450° C). This eliminates all risks of interruption of the signal and of short circuit between these conductors.

### e) Sealing against humidity

The sensing elements of a prior art mineral insulated thermocouples are subject, due to the hygroscopic nature of the insulating material, to absorption of humidity inside the protective sheath, made of metal or ceramic material, which protects the thermocouple from the measurement environment. If this drawback occurs, operation of the thermocouple is jeopardized.

We can imagine during operation the hot junction exposed to a temperature differing from the ambient temperature and the cold junction or transition exposed to ambient temperature.

For thermodynamic reasons, a temperature gradient is created along the axis of the mineral insulated sensing element and, along the temperature gradient, a point is determined in which conditions of temperature, pressure and relative humidity are such as to create condensate, i.e. water. The presence of water corresponds to a short circuit between the thermoelements and possibly between elements and sheath; this causes significant variations of the signal generated.

Instead, sealing of the open end of the mineral insulated sensing element guaranteed, according to the invention, by the co-molded transition made of thermoplastic material protects it from any contact with the outside environment and therefore also with humidity.

## Claims

1. Mineral oxide thermocouple temperature probe comprising a mineral insulated sensing element (11) and an extension cable (12), wherein said sensing element (11) includes a pair of homogeneous conductor wires (13), forming the thermocouple, while said extension cable (12) includes a pair of electrical conductors (14) substantially corresponding to those of the thermocouple, and wherein the terminals of the two conductor wires (13) of the thermocouple (11) abut against the corresponding terminals of the electrical conductors (14) of the extension cable (12), providing an electrical junction at a connection body between said sensing element of the thermocouple (11) and said extension cable (12), **characterized in that** said connection body (15) is composed of a thermosetting plastic material, capable of withstanding temperatures in the order of approximately 400 - 450°C, co-molded with respect to said electrical junction.

2. Temperature probe as claimed in claim 1, **characterized in that** said connection body (15) is formed by a capsule made of a thermosetting plastic material, capable of withstanding temperatures in the order of approximately 400 - 450° C, co-molded and closely shrouding with respect to said electrical junction.

3. Temperature probe as claimed in claim 1 and/or 2, **characterized in that** said thermoplastic material is of silicone, Bakelite or melamine type.

4. Production process of a mineral oxide thermocouple temperature probe as claimed in one or more of the preceding claims, **characterized in that** there is formed a connection body (15) between the sensing element (11) of the thermocouple and the extension cable (12), providing a protection of the electrical connection between said sensing element and said cable, through co-molding of a thermosetting plastic material capable of withstanding temperatures in the order of approximately 400 - 450°C.

5. Process as claimed in claim 4, **characterized in that** there is formed a capsule connection body (15) in a thermosetting plastic material, capable of withstanding temperatures in the order of approximately 400 - 450°C, co-molded and closely shrouding with respect to said electrical junction between the sensing element (11) of the thermocouple and the extension cable (12).

6. Process as claimed in claim 4 and/or 5, **characterized in that** a thermoplastic material used is of silicone, Bakelite or melamine type.
